# DEMANDE DE BREVET EUROPEEN

(11) **EP 1 245 960 A2**
(43) Date de publication de la demande: **02.10.2002**
(21) Numéro de dépôt: 02290440.3
(22) Date de dépôt: 22.02.2002
(51) Int. Cl.: G01P 15/10

(54) **Accéléromètre à lames vibrantes.**

(30) Priorité: 26.02.2001 FR 0102573
(71) Demandeur: Sagem S.A., 75015 Paris (FR)
(72) Inventeur: Featonby, Paul David, 75008 Paris (FR); Le Roy, Jean-Claude, 95000 Cergy (FR)
(74) Mandataire: Fort, Jacques

(57) **Abrégé**

Le dispositif accélérométrique monolithique plat comprend un corps (12) ayant une base (16) et deux cellules de mesure ayant chacune une masse sismique (24a-24b) reliée à la base par une articulation permettant à la masse de tourner autour d'un axe perpendiculaire à un axe sensible du détecteur et un capteur de force à poutre vibrante reliant la masse à la base, les cellules étant placées de façon que, lorsqu'une des poutres est soumise à une force de traction due à une accélération suivant l'axe sensible, l'autre poutre est soumise à une force de compression de même valeur. Les cellules sont disposées tête-bêche et symétriquement par rapport à l'axe de moyens (20) de fixation de la base à la structure (18) dont l'accélération est à mesurer. La liaison entre la base et chaque masse sismique comporte également un cadre monolithique constituant sensiblement les cotés d'un losange dont une diagonale est constituée par la poutre et dont les sommets appartenant à l'autre diagonale sont reliés l'un à la masse et l'autre à la base.

## Description

La présente invention concerne les accéléromètres miniature du type comportant des masses sismiques, dites aussi masses d'épreuve, non ramenées à une position d'équilibre par un asservissement.

Ils sont différents des accéléromètres à pendule asservi, qui peuvent être précis mais sont d'un coût très élevé, comportant des moyens de commande électrostatiques ou électromagnétiques destinés à ramener la masse sismique dans une position déterminée. Ces appareils, fonctionnant en boucle fermée, sont complexes. De plus, ils utilisent dans la plupart des cas une électronique analogique.

On connaît déjà des accéléromètres miniatures à masse pendulaire non asservie, dont chaque masse pendulaire est sollicitée vers une position de repos par une liaison avec une base par une paire de poutres vibrantes placées de façon qu'une accélération suivant un axe sensible crée une contrainte de traction dans une poutre et de compression dans l'autre. Les deux poutres vibrantes, en matériau piézo-électrique sont munies d'électrodes destinées à faire vibrer les poutres à leur fréquence de résonance. La variation de la fréquence de résonance des poutres est représentative de l'accélération appliquée. L'utilisation de deux poutres, une en traction et une en compression, permet, par exploitation différentielle des fréquences de résonance, de linéariser le comportement.

Ces appareils permettent d'obtenir un signal numérique. Ils sont simples à réaliser. Jusqu'ici ils présentent une précision insuffisante pour certaines applications.

La demande de brevet FR 00 10675 décrit par ailleurs un accéléromètre monolithique plat comprenant un corps ayant une base et deux cellules de mesure ayant chacune une masse sismique reliée à la base par une articulation permettant à la masse de tourner autour d'un axe perpendiculaire à un axe sensible du détecteur et un capteur de force à poutre vibrante reliant la masse à la base, les cellules étant placées de façon que, lorsqu'une des poutres est soumise à une force de traction due à une accélération suivant l'axe sensible, l'autre poutre est soumise à une force de compression de même valeur, les cellules étant disposées tête-bêche et symétriquement par rapport à un axe.

La structure plate de cette disposition (l'épaisseur étant généralement inférieure à 1 mm pour des dimensions en plan pouvant aller jusqu'à 1 cm environ) permet une fabrication simple et économique, par des procédés d'attaque chimique par exemple. La fabrication peut être collective, c'est-à-dire que de nombreux accéléromètres peuvent être simultanément fabriqués sur une même tranche de matériau en général piézo-électrique, mais pouvant être le silicium.

Dans un accéléromètre tel que celui suivant le document FR-A-2 685 964, la poutre ou chaque poutre est simple, ce qui crée des problèmes d'isolement, qui ne peuvent être compensés que partiellement et par une structure de filtrage mécanique qui consomme de la surface et ajoute à l'ensemble une souplesse qui fait que les premiers modes de vibration de structure risquent de se placer dans la plage de fréquences susceptibles d'être rencontrées pour les applications potentielles.

L'invention vise à fournir un détecteur accéléromètrique monolithique miniature du genre ci-dessus défini répondant mieux que ceux antérieurement connus aux exigences de la pratique, notamment en ce que les problèmes d'isolement y sont résolus de façon simple.

L'invention propose dans ce but un détecteur accélérométrique monolithique plat comprenant un corps ayant une base et deux cellules de mesure ayant chacune une masse sismique reliée à la base par une articulation permettant à la masse de tourner autour d'un axe perpendiculaire à un axe sensible du détecteur et un capteur de force à poutre vibrante reliant la masse à la base, les cellules étant placées de façon que, lorsqu'une des poutres est soumise à une force de traction due à une accélération suivant l'axe sensible, l'autre poutre est soumise à une force de compression de même valeur, les cellules étant disposées tête-bêche et symétriquement par rapport à un axe qui peut être celui de moyens de fixation de la base à la structure dont l'accélération est à mesurer, caractérisé en ce que la liaison entre la base et chaque masse sismique comporte de plus un cadre monolithique formant sensiblement les cotés d'un losange dont une diagonale est constituée par la poutre et dont les sommets appartenant à l'autre diagonale sont reliés l'un à la masse et l'autre à la base.

Un avantage supplémentaire de cette constitution est que les deux extrémités de la poutre sont reliées par le cadre à la base du corps, ce qui les rend accessibles pour y faire passer des pistes de liaison électrique avec le circuit d'excitation et de mesure.

La liaison entre le cadre et au moins la masse sismique d'une même cellule (et éventuellement aussi la liaison entre le cadre et la base) est suffisamment mince, au moins localement, pour constituer une charnière. Pour éviter l'apparition de moments de torsion, il est très préférable de placer la charnière de la poutre et celle du cadre en alignement avec le centre de gravité de la masse sismique.

Dans un mode avantageux de réalisation de l'invention, le losange présente au repos une forme telle qu'il y ait un effet d'amplification des efforts appliqués à la poutre.

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :
- la figure 1, où l'échelle n'est pas respectée pour plus de clarté, est une vue en plan simplifiée d'un détecteur suivant un premier mode de réalisation ;
- la figure 2 est une vue en coupe suivant la ligne II-II de la figure 1.

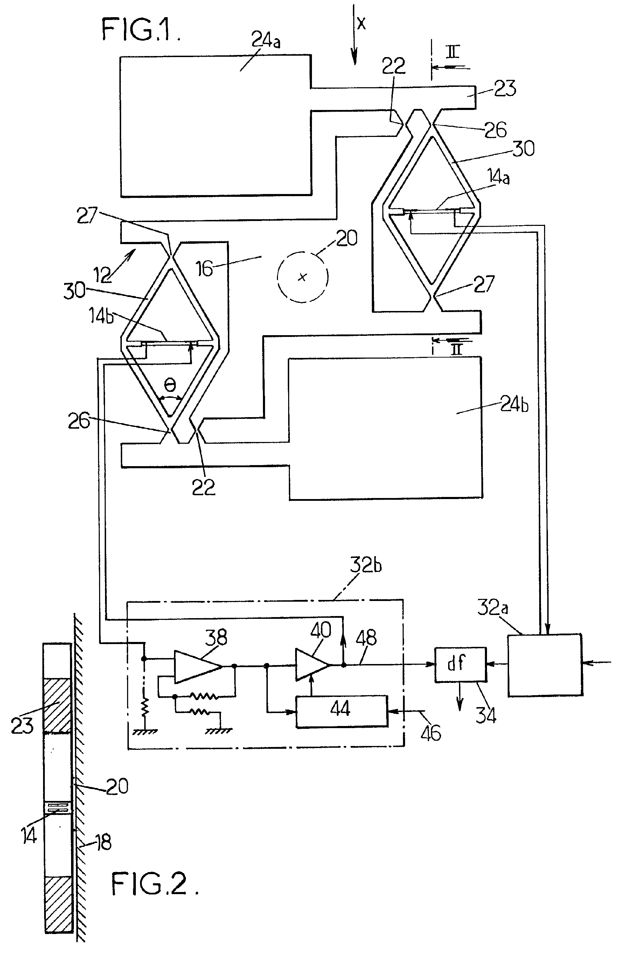

Le détecteur accélérométrique montré schématiquement en figures 1 et 2 a une constitution monolithique. Il peut être regardé comme ayant un corps 12 à deux cellules ayant chacune un capteur de force 14a ou 14b constitué par une « poutre » formée, dans le cas illustré, par au moins une lame vibrante reliée à un circuit de mesure. Ce circuit mesure la différence entre la fréquence de résonance de la lame d'une cellule et celle de l'autre cellule.

Le corps 12 présente une base 16 destinée à être fixée à la structure dont l'accélération est à mesurer. Dans le cas illustré, l'emplacement de fixation constitue un centre de symétrie pour le détecteur. Dans d'autres cas, il y a plusieurs emplacements à fixation. Toujours dans le cas illustré sur les figures 1 et 2, le corps est solidarisé d'un support 18 par collage de sa base sur une excroissance 20 du support. Le jeu ménagé entre le support et la grande face en regard du corps 12 peut être très faible, par exemple de quelques µm dans le cas d'un accéléromètre miniature de forme plate de quelques centaines de µm d'épaisseur. Le support constitue alors une butée limitant le débattement transversal du corps. Dans d'autres modes de réalisation, notamment lorsque la base du capteur est collée sur plusieurs saillies du support, la distance peut être de quelques mm.

Le corps et le support peuvent constituer un ensemble monolithique. Mais, dans la plupart des cas, le corps est séparé du support. Ce dernier appartient par exemple à un boîtier en métal alors que le corps est fabriqué par des techniques classiques d'attaque chimique. Le corps est généralement en quartz qui a l'avantage d'être piézo-électrique. Dans une variante de réalisation, l'ensemble est en silicium et l'excitation doit alors être effectuée par d'autres moyens.

La base 16 est reliée, par des articulations respectives 22, à deux masses sismiques ou masses d'épreuve 24a et 24b oscillantes, symétriques par rapport à un axe. Les zones 26 et 27 interposées entre chaque lame constituant un capteur 14a ou 14b, d'une part, la masse sismique et la base, d'autre part, et sont constituées par des zones minces du corps. L'articulation 22 est orthogonale à l'axe sensible X et elle forme aussi charnière. Elle est placée sur un bras 23 prolongeant la portion massive de la masse sismique 24a ou 24b. La disposition relative de la charnière 26 et de l'articulation 22 peut être inversée.

La base et chaque masse sismique sont reliées par un ensemble incorporant une des poutres. Mais cette liaison entre la base 16 et chaque masse sismique comporte, en plus d'une des poutres, un cadre monolithique constituant sensiblement les cotés d'un losange. Une des diagonales du losange est constituée par la poutre qui est reliée au cadre par des zones qui n'ont pas obligatoirement une souplesse supérieure à celle de la partie courante de la poutre, car celle-ci ne subit pratiquement pas d'effort de flexion du fait que le bras de levier d'action sur la poutre est beaucoup plus court que la distance entre l'articulation et le centre de gravité et par suite de la présence du cadre. Les poutres représentées sont à bords parallèles et d'épaisseur constante dans le plan, mais elles peuvent avoir une épaisseur variable, par exemple plus importante aux extrémités qu'au milieu, comme indiqué dans la demande de brevet déposée le même jour que la présente demande et ayant pour titre « Accéléromètre miniature à deux cellules ». Un des sommets du cadre 30 autres que ceux qui sont reliés par la poutre est connecté à la masse sismique par une zone mince 26 formant charnière. Le sommet opposé est connecté à la base par une zone 27 qui n'a pas obligatoirement la même souplesse que la charnière 26 et peut être plus épaisse.

Comme indiqué plus haut, l'emplacement relatif de l'articulation et de la charnière est tel qu'il y a un effet de levier réduisant le déplacement du cadre et de la lame transversalement à l'axe sensible par rapport à celui du centre de gravité G de la masse sismique. Du fait de la différence importante de bras de levier par rapport à l'articulation, la « poutre » reste en permanence orientée sensiblement suivant l'axe sensible et travaille en traction-compression. Ainsi les poutres n'influencent pas de façon défavorable le mode de résonance de structure selon l'axe sensible.

Le losange peut avoir une forme fournissant un effet d'amplification des déplacements ; cet effet est d'autant plus élevé que l'angle θ des cotés, aux sommets reliés à la masse sismique et à la base, est supérieur à 90°.

Les éléments constitutifs du capteur peuvent avoir tous la même épaisseur, ce qui facilite la fabrication par attaque chimique. Toutefois, on peut donner aux poutres une épaisseur inférieure pour améliorer les caractéristiques de mesure.

La figure 1 montre également, à titre d'exemple, un circuit pouvant être associé aux poutres 14a et 14b pour mesurer la fréquence propre de chaque poutre et en déduire l'accélération. Ce circuit comporte deux oscillateurs 32a et 32b dont seul le second est montré en détail. Il comporte également un module 34 de mesure de la différence entre les fréquences des signaux de sortie des oscillateurs. Chacun des oscillateurs est prévu pour maintenir à une valeur constante l'amplitude du courant appliqué aux électrodes des poutres, dont la constitution peut être celle décrite dans l'un des brevets de la demanderesse mentionnés plus haut. L'oscillateur 32b montré en figure 1 comprend un amplificateur 38 dont la boucle de réaction contient, disposées en série, les électrodes d'excitation à la résonance de la lame constituant la poutre 14b et un amplificateur à gain commandé 40. Le gain de l'amplificateur 40 est commandé par un module 44 qui reçoit une consigne de tension sur une entrée 46 et la compare à la tension de sortie de l'amplificateur 38. Du fait que le courant dans les électrodes des lames est maintenu à une valeur constante, fixée par la tension de consigne, les variations de fréquence liées à l'isochronisme sont annulées.

Les sorties des deux oscillateurs sont appliquées au module 34 qui détermine la différence df entre les fréquences de résonance et en déduit l'accélération. Cette mesure peut être effectuée de façon numérique, du fait qu'une fréquence peut aisément être transformée en une série d'impulsions dont la fréquence de répétition correspond à la fréquence de résonance.

L'invention est susceptible de nombreuses variantes de réalisation. La disposition de la charnière et de l'articulation peut être inversée c'est à dire que la charnière du cadre peut être placée entre l'articulation de la masse sismique et le centre de gravité de la masse sismique. Chaque poutre peut être constituée de deux lames parallèles, par exemple suivant la disposition décrite dans la demande de brevet déposée le même jour que la présente demande et ayant pour titre « Accéléromètre miniature à deux cellules » à laquelle on pourra se reporter.

Le détecteur qui vient d'être décrit se prête bien à une fabrication collective. Surtout lorsque le détecteur est constitué de façon monolithique avec le support 18, il est possible de réaliser, en une même opération, deux détecteurs ayant des axes sensibles croisés sur une même tranche de semi-conducteur. Il est également possible d'associer, sur une même tranche, un ou deux détecteurs accélérométriques plats du genre représenté avec un capteur gyrométrique également plat.

## Revendications

1. Détecteur accélérométrique monolithique plat comprenant un corps (12) ayant une base (16) et deux cellules de mesure ayant chacune une masse sismique (24a-24b) reliée à la base par une articulation (22) permettant à la masse de tourner autour d'un axe perpendiculaire à un axe sensible du détecteur et un capteur de force à poutre vibrante reliant la masse à la base, les cellules étant placées de façon que, lorsqu'une des poutres est soumise à une force de traction due à une accélération suivant l'axe sensible, l'autre poutre est soumise à une force de compression de même valeur, les cellules étant disposées tête-bêche et symétriquement par rapport à un axe, dont la liaison entre la base et chaque masse sismique comporte également un cadre monolithique (30) constituant sensiblement les cotés d'un losange dont une diagonale est constituée par la poutre et dont les sommets appartenant à l'autre diagonale sont reliés l'un à la masse et l'autre à la base.

2. Détecteur selon la revendication 1, **caractérisé en ce que** chaque masse sismique est reliée à la poutre par une charnière (26), l'articulation et la charnière (26) étant sensiblement alignées avec le centre de gravité de la masse sismique correspondante.

3. Détecteur selon la revendication 3, **caractérisé en ce que** les masses sismiques sont séparées d'un support par un jeu faible par rapport à l'épaisseur du corps.

4. Détecteur selon l'une quelconque des revendications précédentes, **caractérisé en ce que** les poutres sont des lames sont à bords parallèles.

5. Dispositif suivant l'une quelconque des revendications précédentes, **caractérisé en ce que** le losange a des angles au sommet (θ) choisis pour provoquer un effet d'amplification des déplacements.
